# EUROPÄISCHE PATENTSCHRIFT

(11) **EP 1 331 685 B1**
(45) Veröffentlichungstag und Bekanntmachung des Hinweises auf die Patenterteilung: **21.04.2010**
(21) Anmeldenummer: 03000242.2
(22) Anmeldetag: 08.01.2003
(51) Int. Cl.: H01M 8/02, B29C 35/08

(54) **Verfahren zur Herstellung eines leitfähigen Formteils**
Method for manufacturing a conductive moulded article
Méthode de fabrication d'un article moulé conductif

(30) Priorität: 17.01.2002 DE 10201516
(43) Veröffentlichungstag der Anmeldung: 30.07.2003
(73) Patentinhaber: Fraunhofer-Gesellschaft zur Förderung der angewandten Forschung e.V., 80686 München (DE)
(72) Erfinder: Eyerer, Peter, Prof., 76227 Karlsruhe (DE); Elsner, Peter, Dr., 76327 Pfinzal (DE); Krausa, Michael, Dr., 76327 Pfinzal (DE); Kauffmann, Axel, Dipl. -Ing., 76327 Pfinzal/Berghausen (DE); Emmerich, Rudolf, Dr., 76448 Durmersheim (DE); Walch, Michael, Dipl.-Ing., 76327 Pfinzal (DE)
(74) Vertreter: Lichti, Heiner

(56) Entgegenhaltungen:
- EP-A- 0 935 303
- DE-A1- 19 757 077
- DE-C1- 4 119 910
- US-A- 4 855 553
- US-A- 5 945 029

## Beschreibung

Die Erfindung betrifft ein Verfahren zur Herstellung eines leitfähigen Formteils, insbesondere einer Bipolarplatte für Brennstoffzellen, aus in eine Polymermatrix eindispergierten partikelförmigen Füllstoffen aus einem leitfähigen Material.

Derartige Formteile sind bekannt und finden insbesondere als Bipolarplatten für Brennstoffzellen Verwendung, welche zur Erzeugung elektrischer Energie durch Direktumwandlung chemischer Energie aus Oxidationsprozessen dienen. Die Brennstoffzellen bestehen in der Regel aus mehreren, hintereinander geschalteten Einzelzellen aus je zwei durch eine für den Brennstoff permeable Membran getrennten Kammern mit jeweils einer Elektrode, wobei die Elektroden über einen Elektrolyt, z.B. in Form einer Polymerelektrolytmembran, leitend in Verbindung stehen. Am bekanntesten sind Wasserstoff- und Methanol-Brennstoffzellen. Den beiden Kammern werden die zu oxidierende Substanz bzw. der Brennstoff und ein Oxidationsmittel in flüssiger oder gasförmiger Phase kontinuierlich zugeführt.

Bei der Direkt-Methanol-Brennstoffzelle werden als Brennstoff Methanol und als Oxidationsmittel Sauerstoff verwendet, wobei an der Anode Methanol zu Kohlendioxid oxidiert (Gleichung I) und an der Kathode Sauerstoff zu Wasser reduziert wird (Gleichung II).

CH₃OH + 7 H₂O ---> CO₂ + 6 H₃O⁺ + 6 e⁻ (I)

3/2 O₂ + 6 H₃O⁺ + 6 e⁻ ---> 9 H₂O (II)

Hieraus resultiert als Gesamtreaktion:

CH₃OH + 3/2 O₂ ---> CO₂ + 2 H₂O (III)

Bei der Wasserstoff-Brennstoffzelle wird als Brennstoff anstelle von Methanol Wasserstoff eingesetzt, wobei an der Anode Wasserstoff zu Protonen oxidiert (Gleichung IV) und an der Kathode Sauerstoff zu Wasser reduziert wird (Gleichung V).

H₂ + 2 H₂O ---> 2 H₃O⁺ + 2 e⁻ (IV)

1/2 O₂ + 2 H₃O⁺ + 2 e⁻ ---> 3 H₂O (V)

Hieraus resultiert als Gesamtreaktion:

H₂ + 1/2 O₂ ---> H₂O (VI)

Während die Polymerelektrolytmembran für die Aufrechterhaltung eines Stromflusses innerhalb der Einzelzellen durch Transport der Protonen bzw. H₃O⁺-Ionen sorgt, dienen die Bipolarplatten zur elektrischen Verbindung der Einzelzellen untereinander zur Übertragung bzw. Ableitung des erzeugten elektrischen Stroms sowie gegebenenfalls zur Zufuhr der Reaktionsgase und Abfuhr der Reaktionsprodukte, was zumeist durch eine entsprechende Oberflächenstruktur der Bipolarplatten geschieht. Die Bipolarplatten bestehen z.B. aus gegebenenfalls beschichteten metallischen Werkstoffen oder Kohlenstoff (US 5 798 188 A, WO 97/50138 A1, WO 97/50139 A1). Nachteilig ist insbesondere die hohe Dichte und das damit verbundene erhebliche Gewicht solcher Bipolarplatten. Beim Einsatz in Brennstoffzellen, die eine hohe Korrosionsbeständigkeit und Gasdichtheit voraussetzen, müssen Edelstahllegierungen oder gepreßter Graphit eingesetzt werden. Dies ist material- und fertigungsaufwendig.

Ferner sind Bipolarplatten aus in einer Polymermatrix dispergierten partikelförmigen Füllstoffen aus leitfähigen Materialien, wie Metallen oder Kohlenstoff, bekannt (US 4 197 178 A, US 4 643 956 A, US 5 942 347 A, DE 31 35 430 C2, DE 42 34 688 C2, DE 198 36 267 A1, DE 198 23 880 A1, WO 00/30202 A1). Diese Platten sind aufgrund ihres erheblich geringeren Gewichtes sowie aus Kostengründen vorteilhaft. Die Platten weisen entweder eine thermoplastische oder eine duroplastische Polymermatrix auf. Im erstgenannten Fall geschieht die Herstellung durch Eindispergieren der Füllstoffpartikel in das plastifizierte Polymer und anschließende Formgebung mittels bekannter thermoplastischer Verarbeitungsverfahren, wie Extrudieren, Spritzgießen oder Pressen. Im Falle einer duroplastischen Polymermatrix werden die partikelförmigen Füllstoffe in flüssige Kunstharze eindispergiert und die Mischung in einem Formwerkzeug ausgehärtet.

Die elektrische Leitfähigkeit von Bipolarplatten der vorgenannten Art läßt sich ausschließlich durch den Füllgrad beeinflussen. Sie ist um so größer ist, je höher der Füllgrad gewählt wird. Umgekehrt verschlechtern sich jedoch die mechanischen Werkstoffeigenschaften, insbesondere die Festigkeit der Platte mit zunehmendem Füllgrad signifikant.

Die EP 0 935 303 A1 beschreibt einen Separator für Brennstoffzellen, welcher von einem Preßling aus einer Polymerkomponente mit leitfähigem Kohlenstoffpulver gebildet ist. Zur Herstellung des Separators ist unter anderem vorgesehen, daß der Preßling nach dem Formvorgang einer Wärmebehandlung bei hinreichend hohen Temperaturen unterzogen wird, um die Polymerkomponente zumindest teilweise zu carbonisieren, um insbesondere für eine erhöhte Leitfähigkeit derselben zu sorgen.

Aus der US 5 945 029 A1 ist es bekannt, zur Herstellung von keramischen Filamenten auf der Basis von PbMeO₃ (mit "Me": Metall) ein Sol von metallorganischen Verbindungen zu extrudieren, die derart erzeugten Fasern zu trocknen und aufzuwickeln und sodann in einem Pyrolyseofen einzuleiten, um die organischen Materialanteile zu entfernen. Der Pyrolyseofen kann beispielsweise induktiv, widerstands- oder mikrowellenbeheizt sein. Eine Erzeugung von leitfähigen Formteilen unter Einsatz von leitfähigen Füllstoffen ist nicht vorgesehen.

Der Erfindung liegt die Aufgabe zugrunde, ein Verfahren der eingangs genannten Art dahingehend weiterzubilden, daß die Leitfähigkeit des erhaltenen Formteils aus in eine Polymermatrix eindispergierten, leitfähigen Füllstoffen bei gleichbleibendem Füllstoffanteil erhöht wird.

Diese Aufgabe wird erfindungsgemäß bei einem Verfahren der eingangs genannten Art dadurch gelöst, daß das Formteil unter zumindest bereichsweiser Pyrolyse der Polymermatrix zwischen zumindest einigen Füllstoffpartikeln mit hochfrequenter elektromagnetischer Strahlung bestrahlt und/oder mit einer elektrischen Spannung beaufschlagt wird, wobei faserförmige Füllstoffpartikel eingesetzt und in flüssigen oder gelösten Mono-, Di- und/oder Oligomeren oder in plastifizierten thermoplastischen und/oder thermoelastischen Polymeren mit ihrer Längsachse im wesentlichen in Richtung der bevorzugten Leitfähigkeit des Formteils ausgerichtet werden, um dem Formteil eine in dieser Richtung selektiv erhöhte Leitfähigkeit zu verleihen.

Durch das erfindungsgemäße Verfahren wird die elektrische Leitfähigkeit des Formteils selbst bei verhältnismäßig geringem Füllgrad signifikant erhöht, indem die isolierende Polymermatrix zwischen zumindest einigen leitfähigen Füllstoffpartikeln zumindest bereichsweise pyrolysiert wird, was z.B. durch Erzeugung von Lichtbögen zwischen den Partikeln infolge der einwirkenden elektrischen Spannung bzw. der einwirkenden elektromagnetischen Strahlung geschehen kann. Im Falle der Einsatzes von Strahlung kommt es je nach Material der Partikel ferner zur Erhitzung der Partikel infolge Strahlungsabsorption, was wiederum zur bereichsweisen Pyrolyse des Polymers des Formteils führt. Der hierbei aufgrund Sauerstoffausschluß entstehende Kohlenstoff bzw. Ruß sorgt für das Zustandekommen einer leitfähigen Verbindung zwischen zumindest einigen Füllstoffpartikeln, wodurch der elektrische Widerstand vermindert und die elektrische Leitfähigkeit des Formteils erhöht wird. Überraschenderweise wurde gefunden, daß die Festigkeit des Formteils durch eine nur lokale Pyrolyse der Polymermatrix praktisch nicht beeinträchtigt wird, so daß eine kostengünstige Herstellung hochleitfähiger Formteile, wie Bipolarplatten für Brennstoffzellen, mit verhältnismäßig geringem Füllgrad möglich ist. Darüber hinaus besteht aufgrund des.Einsatzes von faserförmigen Füllstoffpartikeln beim Einmischen der Füllstoffpartikel in flüssige oder gelöste Mono-, Di- und/oder Oligomere bzw. in plastifizierte thermoplastische und/oder thermoelastische Polymere die Möglichkeit, die Partikel mit ihrer Längsachse im wesentlichen in Richtung der bevorzugten Leitfähigkeit des Formteils auszurichten, um dem Formteil eine in dieser Richtung selektiv erhöhte Leitfähigkeit zu verleihen, wie es weiter unten noch näher erläutert ist.

Im Falle des Einsatzes hochfrequenter elektromagnetischer Strahlung wird die Strahlungsfrequenz vorzugsweise zwischen 300 MHz und 300 GHz (Mikrowellenstrahlung) eingestellt. Bei Anlegen einer elektrischen Spannung an das Formteil wird diese bevorzugt derart gewählt, daß sich eine Stromstärke zwischen 1 A und 100 A, insbesondere zwischen 5 A und 30 A einstellt.

In bevorzugter Ausführung ist vorgesehen, daß das Formteil während der Einwirkung der hochfrequenten elektromagnetischen Strahlung und/oder der elektrischen Spannung unter Druck gesetzt wird, um insbesondere im Falle einer thermoplastischen und/oder thermoelastischen Polymermatrix beim Aufschmelzen des Polymers zwischen den Füllstoffpartikeln infolge der Bestrahlung bzw. des elektrischen Spannungsfeldes zumindest einige Füllstoffpartikel miteinander in leitenden Kontakt zu bringen.

Wie bereits erwähnt, gibt das erfindungsgemäße Verfahren auch die Möglichkeit, die Leitfähigkeit des Formteils in einer gewünschten Raumrichtung selektiv zu erhöhen, was insbesondere bei Bipolarplatten von Interesse ist, welche in Richtung der Flächennormalen der Platte gut leitfähig sein sollten, um die hintereinander angeordneten Einzelzellen von Brennstoffzellen leitfähig zu verbinden. Hierzu ist vorgesehen, daß die hochfrequente elektromagnetische Strahlung und/oder die elektrische Spannung entsprechend der Richtung der bevorzugten Leitfähigkeit des Formteils, insbesondere flächennormal zur Platte, ausgerichtet wird. Auf diese Weise werden vornehmlich die in Strahlungs- bzw. Spannungsrichtung hintereinander angeordneten Füllstoffpartikel durch Pyrolyse der Polymermatrix des Formteils leitfähig miteinander verbunden, so daß das Formteil zumindest teilweise durchsetzende Leitpfade gebildet werden. Selbstverständlich kann das Formteil auch in mehreren Raumrichtungen mit Strahlung und/oder Spannung beaufschlagt, z.B. in einem Strahlungs- und/oder Spannungsfeld mit im wesentlichen parallelen Feldlinien gedreht werden, so daß sich eine insoweit allgemeine (richtungsunabhängige) Erhöhung der Leitfähigkeit ergibt.

Die partikelförmigen Füllstoffe werden zweckmäßig aus der Gruppe Metalle, Metallegierungen, Metalloxide, Kohlenstoff, insbesondere Graphit und/oder Ruß, gewählt.

Das erfindungsgemäße Verfahren ist sowohl zur Herstellung von Formteilen mit einer thermoplastischen und/oder thermoelastischen Polymermatrix als auch solcher mit einer duroplastischen oder elastomeren Polymermatrix geeignet. Eine bevorzugte Ausführungsform sieht dabei vor, daß die Füllstoffpartikel in wenigstens ein flüssiges oder gelöstes Mono-, Di- und/oder Oligomer eindispergiert werden und die derart erhaltene Mischung in einem Formwerkzeug unter Bildung des Formteils ausgehärtet wird. Je nach Art der eingesetzten Mono-, Di- und/oder Oligomere können somit Formteile mit unvernetzter (thermoplastischer) sowie teilweise vernetzter (thermoelastischer oder elastischer) oder hochvernetzter (duroplastischer) Polymermatrix hergestellt werden. Ferner besteht die Möglichkeit, feste Polymerpartikel der flüssigen Ausgangsmischung zuzugeben, um den bei der Aushärtung gegebenenfalls auftretenden Schwund zu vermeiden.

Gemäß einer weiteren bevorzugten Ausführungsform ist vorgesehen, daß die Füllstoffpartikel in wenigstens ein plastifiziertes thermoplastisches und/oder thermoelastisches Polymer eindispergiert werden und die derart erhaltene Mischung geformt und unter Bildung des Formteils abgekühlt wird. Die Formgebung kann durch beliebige bekannte thermoplastische Verarbeitungsverfahren, wie Extrudieren, Spritzgießen, Pressen, Kneten oder dergleichen, geschehen.

Im Hinblick auf die erfindungsgemäße Ausrichtung der faserförmigen Füllstoffpartikel gemäß der bevorzugten Leitfähigkeitsrichtung ist in bevorzugter Ausführung vorgesehen, daß faserförmige, ferromagnetische Füllstoffpartikel eingesetzt und in der noch flüssigen oder plastifizierten Mischung durch Anlegen eines Magnetfeldes entsprechend der Richtung der bevorzugten Leitfähigkeit des Formteils, insbesondere flächennormal zur Platte, ausgerichtet werden. Stattdessen können die faserförmigen Füllstoffpartikel auch durch Eintrag von Scherkräften entsprechend der Richtung der bevorzugten Leitfähigkeit des Formteils, insbesondere flächennormal zur Platte, ausgerichtet werden, was beispielsweise durch entsprechende Aufgabe der Fasern in das flüssige Polymer mittels geeigneter Extrusions- oder Spritzgießeinrichtungen geschehen kann.

Beim Einsatz thermoplastischer und/oder thermoelastischer Polymere ist in Weiterbildung des Verfahrens vorgesehen, daß die Füllstoffpartikel in ein erstes plastifiziertes thermoplastisches und/oder thermoelastisches Polymer eindispergiert werden, die derart erhaltene erste Mischung mit einem zweiten plastifizierten thermoplastischen und/oder thermoelastischen Polymer, welches mit dem ersten Polymer nicht oder nur teilweise mischbar ist, eingemischt wird und die schließlich erhaltene Endmischung geformt und unter Bildung des Formteils abgekühlt wird. Alternativ besteht die Möglichkeit, daß ein erstes plastifiziertes thermoplastisches und/oder thermoelastisches Polymer in ein zweites plastifiziertes thermoplastisches und/oder thermoelastisches Polymer, welches mit dem ersten Polymer nicht oder nur teilweise mischbar ist, eingemischt wird, in die derart erhaltene erste Mischung die Füllstoffpartikel eindispergiert werden und die schließlich erhaltene Endmischung geformt und unter Bildung des Formteils abgekühlt wird.

In beiden Fällen wird aufgrund unterschiedlicher Affinität der Füllstoffpartikel zu den beiden nicht oder nur schlecht mischbaren Polymerphasen eine Anreicherung der Füllstoffpartikel an der Phasengrenze von kontinuierlicher und disperser Phase erreicht und werden im fertigen Formteil durch die Tropfenform und -größe der dispersen Phase vorgegebene Leitpfade gebildet. Die Tropfenform und -größe der dispersen Phase kann z.B. durch Eintrag von Scherkräften, Ultraschall und/oder durch Zusatz von oberflächenaktiven Substanzen, wie Detergentien, Emulgatoren, Trennmitteln oder dergleichen, bei der Verarbeitung gesteuert werden. Hierbei kann insbesondere auch eine im wesentlichen längliche bzw. ovale Fibrillenform der dispersen Phase erzeugt werden, die bei etwa paralleler Ausrichtung der Längsachse der Fibrillen für eine erhöhte Leitfähigkeit des Formteils in Längsrichtung der Fibrillen sorgt.

Ein mittels des erfindungsgemäßen Verfahrens hergestelltes leitfähiges Formteil, insbesondere in Form einer Bipolarplatte für Brennstoffzellen, weist in eine Polymermatrix eindispergierte faserförmige Füllstoffpartikel aus einem leitfähigen Material auf, wobei die Polymermatrix des Formteils zumindest bereichsweise zwischen zumindest einigen Füllstoffpartikeln pyrolysiert ist. Die faserförmigen Füllstoffpartikel vorgesehen sind im wesentlichen in Richtung der bevorzugten Leitfähigkeit des Formteils, insbesondere im wesentlichen flächennormal zur Platte ausgerichtet, um dem Formteil eine in dieser Richtung selektiv erhöhte Leitfähigkeit zu verleihen.

Ein solches Formteil zeichnet sich durch eine gegenüber herkömmlichen gattungsgemäßen Formteilen erhöhte elektrische Leitfähigkeit aus, welche durch die Kohlenstoff bzw. Ruß enthaltenden, pyrolysierten Bereiche der Polymermatrix zwischen zumindest einigen Füllstoffpartikeln und die dadurch erhaltene leitende Verbindung zwischen denselben sichergestellt ist.

Zur weiterhin selektiven Erhöhung der elektrischen Leitfähigkeit in einer gewünschten Raumrichtung des Formteils ist vorgesehen, daß die Polymermatrix vornehmlich zwischen in Richtung der bevorzugten Leitfähigkeit des Formteils, insbesondere im wesentlichen flächennormal der Platte, hintereinander angeordneten Füllstoffpartikeln pyrolysiert ist.

Das Formteil enthält vorzugsweise partikelförmige Füllstoffe aus der Gruppe Metalle, Metallegierungen, Metalloxide, Kohlenstoff, insbesondere Ruß und/oder Graphit.

Die Polymermatrix des Formteils kann aus einem thermoplastischen und/oder thermoelastischen Polymer oder aus einem Blend solcher Polymere, z.B. aus Polyolefinen (Polyethylen, Polypropylen etc.), Polyamiden, Polyestern, Polyethern etc., oder aus einem duroplastischen und/oder elastischen Polymer oder aus einem Blend solcher Polymere bestehen, z.B. aus Polyurethan-, Epoxy-, Melaminharzen oder dergleichen.

Nachfolgend ist die Erfindung anhand eines Ausführungsbeispiels näher erläutert:

### Ausführungsbeispiel

Zur Herstellung einer Bipolarplatte für Brennstoffzellen werden faserförmige Metallpartikel in ein flüssiges Diisocyanat eindispergiert, ein flüssiger Dialkohol zugesetzt und die flüssige Mischung in ein Formwerkzeug überführt. An das Formteil wird ein den Formraum senkrecht durchsetzendes Magnetfeld angelegt, was mittels eines in das Formwerkzeug integrierten Elektro- oder Permanentmagneten geschehen kann. Auf diese Weise werden die Fasern in Richtung der Feldlinien des Magnetfeldes im wesentlichen parallel zueinander unter Bildung von Leitpfaden ausgerichtet. Sodann wird die Mischung zu einem Polyurethan unter Bildung der Platte ausgehärtet.

Wie bereits erwähnt, können stattdessen die faserförmigen Füllstoffpartikel auch durch Eintrag von Scherkräften entsprechend der Richtung der bevorzugten Leitfähigkeit des Formteils, insbesondere flächennormal zur Platte, ausgerichtet werden.

Um durch teilweise Pyrolyse des Polyurethans unter Bildung von Kohlenstoff bzw. Ruß eine leitfähige Verbindung zwischen zumindest einigen Fasern sicherzustellen, wird zur Erhöhung der Leitfähigkeit die Platte mit Mikrowellen mit einer Frequenz von etwa 100 GHZ und einer Leistung zwischen 0,2 und 2 kW bestrahlt, wobei die Strahlungsrichtung im wesentlichen flächennormal zur Platte eingestellt wird. Dabei wird das Polymer zwischen zumindest einigen Füllstoffpartikeln durch Mikrowellenabsorption unter Bildung von Kohlenstoff pyrolysiert, so daß eine leitfähige Verbindung zwischen diesen Partikeln zustandekommt und die Leitfähigkeit der Bipolarplatte in Strahlungsrichtung insgesamt signifikant erhöht wird. Sofern ein für Mikrowellen durchlässiges Formwerkzeug eingesetzt wird, kann das Formwerkzeug mit der Platte in einem Mikrowellenfeld angeordnet werden. Die Bestrahlung kann während oder nach der Formgebung der Platte stattfinden.

Schließlich wird die fertige Bipolarplatte dem Formwerkzeug entnommen.

## Patentansprüche

1. Verfahren zur Herstellung eines leitfähigen Formteils, insbesondere einer Bipolarplatte für Brennstoffzellen, aus in eine Polymermatrix eindispergierten partikelförmigen Füllstoffen aus einem leitfähigen Material, **dadurch gekennzeichnet, daß** das Formteil unter zumindest bereichsweiser Pyrolyse der Polymermatrix zwischen zumindest einigen Füllstoffpartikeln mit hochfrequenter elektromagnetischer Strahlung bestrahlt und/oder mit einer elektrischen Spannung beaufschlagt wird, wobei faserförmige Füllstoffpartikel eingesetzt und in flüssigen oder gelösten Mono-, Di- und/oder Oligomeren oder in plastifizierten thermoplastischen und/oder thermoelastischen Polymeren mit ihrer Längsachse im wesentlichen in Richtung der bevorzugten Leitfähigkeit des Formteils ausgerichtet werden, um dem Formteil eine in dieser Richtung selektiv erhöhte Leitfähigkeit zu verleihen.

2. Verfahren nach Anspruch 1, **dadurch gekennzeichnet, daß** hochfrequente elektromagnetische Strahlung mit einer Frequenz zwischen 300 MHz und 300 GHz eingesetzt wird.

3. Verfahren nach Anspruch 1 oder 2, **dadurch gekennzeichnet, daß** die elektrische Spannung derart gewählt wird, daß sich eine Stromstärke zwischen 1 A und 100 A, insbesondere zwischen 5 A und 30 A einstellt.

4. Verfahren nach einem der Ansprüche 1 bis 3, **dadurch gekennzeichnet, daß** das Formteil während der Einwirkung der hochfrequenten elektromagnetischen Strahlung und/oder der elektrischen Spannung unter Druck gesetzt wird.

5. Verfahren nach einem der Ansprüche 1 bis 4, **dadurch gekennzeichnet, daß** die hochfrequente elektromagnetische Strahlung und/oder die elektrische Spannung entsprechend der Richtung der bevorzugten Leitfähigkeit des Formteils, insbesondere flächennormal zur Platte, ausgerichtet wird.

6. Verfahren nach einem der Ansprüche 1 bis 5, **dadurch gekennzeichnet, daß** die Füllstoffpartikel aus der Gruppe Metalle, Metallegierungen, Metalloxide, Kohlenstoff, insbesondere Graphit und/oder Ruß, gewählt werden.

7. Verfahren nach einem der Ansprüche 1 bis 6, **dadurch gekennzeichnet, daß** die Füllstoffpartikel in wenigstens ein flüssiges oder gelöstes Mono-, Di- und/oder Oligomer eindispergiert werden und die derart erhaltene Mischung in einem Formwerkzeug unter Bildung des Formteils ausgehärtet wird.

8. Verfahren nach einem der Ansprüche 1 bis 6, **dadurch gekennzeichnet, daß** die Füllstoffpartikel in wenigstens ein plastifiziertes thermoplastisches und/oder thermoelastisches Polymer eindispergiert werden und die derart erhaltene Mischung geformt und unter Bildung des Formteils abgekühlt wird.

9. Verfahren nach einem der Ansprüche 1 bis 8, **dadurch gekennzeichnet, daß** die Ausrichtung der faserförmigen Füllstoffpartikel derart geschieht, indem faserförmige, ferromagnetische Füllstoffpartikel eingesetzt und in der noch flüssigen oder plastifizierten Mischung durch Anlegen eines Magnetfeldes entsprechend der Richtung der bevorzugten Leitfähigkeit des Formteils, insbesondere flächennormal zur Platte, ausgerichtet werden.

10. Verfahren nach einem der Ansprüche 1 bis 8, **dadurch gekennzeichnet, daß** die Ausrichtung der faserförmigen Füllstoffpartikel derart geschieht, indem die Füllstoffpartikel in der noch flüssigen oder plastifizierten Mischung durch Eintrag von Scherkräften entsprechend der Richtung der bevorzugten Leitfähigkeit des Formteils, insbesondere flächennormal zur Platte, ausgerichtet werden.

11. Verfahren nach Anspruch 8, **dadurch gekennzeichnet, daß** die Füllstoffpartikel in ein erstes plastifiziertes thermoplastisches und/oder thermoelastisches Polymer eindispergiert werden, die derart erhaltene erste Mischung mit einem zweiten plastifizierten thermoplastischen und/oder thermoelastischen Polymer, welches mit dem ersten Polymer nicht oder nur teilweise mischbar ist, eingemischt wird und die schließlich erhaltene zweite Mischung geformt und unter Bildung des Formteils abgekühlt wird.

12. Verfahren nach Anspruch 8, **dadurch gekennzeichnet, daß** ein erstes plastifiziertes thermoplastisches und/oder thermoelastisches Polymer in ein zweites plastifiziertes thermoplastisches und/oder thermoelastisches Polymer, welches mit dem ersten Polymer nicht oder nur teilweise mischbar ist, eingemischt wird, in die derart erhaltene erste Mischung die Füllstoffpartikel eindispergiert werden und die schließlich erhaltene Endmischung geformt und unter Bildung des Formteils abgekühlt wird.

## Claims

1. A method for the manufacture of a conductive moulding, in particular a bipolar plate for fuel cells, from filler materials of a conductive material dispersed into a polymer matrix, **characterised in that** moulding is radiated under at least partial pyrolysis of the polymer matrix between at least some filler particles with high frequency electromagnetic radiation and/or is loaded with an electrical voltage, wherein fibrous filler particles are used and aligned in liquid or dissolved mono-, di- and/or oligomers or in plasticised thermoplastic and/or thermoelastic polymers with their longitudinal axis essentially in the direction of the preferred conductivity of the moulding, in order to impart to the moulding a conductivity selectively increased in this direction.

2. The method according to Claim 1, **characterised in that** high frequency electromagnetic radiation with a frequency of between 300 MHz and 300 GHz is set.

3. The method according to Claim 1 or 2, **characterised in that** the electrical voltage is selected in such a manner that a current intensity of between 1 A and 100 A, in particular between 5 A and 30 A, is set.

4. The method according to any one of Claims 1 to 3, **characterised in that** the moulding is pressurised during the action of the high frequency electromagnetic radiation and/or the electrical voltage.

5. The method according to any one of Claims 1 to 4, **characterised in that** the high frequency electromagnetic radiation and/or the electrical voltage is aligned according to the direction of the preferred conductivity of the moulding, in particular perpendicular to the surface of the plate.

6. The method according to any one of Claims 1 to 5, **characterised in that** the filler particles are selected from the group of metals, metal alloys, metal oxides, carbon, in particular graphite and/or soot.

7. The method according to any one of Claims 1 to 6, **characterised in that** the filler particles are dispersed in at least one liquid or dissolved mono-, di- and/or oligomer and the mixture thereby obtained is hardened in a moulding tool with the formation of the moulding.

8. The method according to any one of Claims 1 to 6, **characterised in that** the filler particles are dispersed in at least one plasticised thermoplastic and/or thermoelastic polymer and the mixture thereby obtained is moulded and cooled with the formation of the moulding.

9. The method according to any one of Claims 1 to 8, **characterised in that** the alignment of the fibrous filler particles is carried out by inserting fibrous ferromagnetic filler particles and by aligning them in the still liquid or plasticised mixture by applying a magnetic field according to the direction of the preferred conductivity of the moulding, in particular perpendicular to the surface of the plate.

10. The method according to any one of Claims 1 to 8, **characterised in that** the alignment of the fibrous filler particles is carried out by aligning the filler particles in the still liquid or plasticised mixture by introducing shearing forces according to the direction of the preferred conductivity of the moulding, in particular perpendicular to the surface of the plate.

11. The method according to Claim 8, **characterised in that** the filler particles are dispersed in a first plasticised thermoplastic and/or thermoelastic polymer, mixing the first mixture thus obtained with a second plasticised thermoplastic and/or thermoelastic polymer which is not or is only partially miscible with the first polymer and moulding the second mixture finally obtained and cooling it with the formation of the moulding.

12. The method according to Claim 8, **characterised in that** a first plasticised thermoplastic and/or thermoelastic polymer is mixed in a second plasticised thermoplastic and/or thermoelastic polymer which is not or only partially miscible with the first polymer, the filler particles are dispersed in the first mixture thus obtained and the end mixture finally obtained is moulded and cooled with the formation of the moulding.

## Revendications

1. Procédé de fabrication d'une pièce moulée conductrice, et notamment d'une plaque bipolaire pour les piles à combustible, à partir d'une charge de remplissage constituée par un matériau conducteur sous forme de particules dispersées dans une matrice de polymère, ledit procédé de fabrication **caractérisé en ce que** la pièce moulée est exposée à un rayonnement électromagnétique de haute fréquence et/ou soumise à une tension électrique avec pyrolyse simultanée d'au moins certaines zones de la matrice de polymère entre au moins quelques particules de remplissage, des particules de remplissage en forme de fibres étant mises en oeuvre et orientées dans les monomères, dimères et/ou oligomères liquides ou dilués ou dans les polymères plastifiés thermoplastiques et/ou thermo-élastiques, leur axe longitudinal suivant principalement le sens de la conductivité préférée de la pièce moulée, afin de conférer à ladite pièce moulée une conductivité sélectivement accrue dans ce sens.

2. Procédé selon la revendication 1, **caractérisé en ce que** le rayonnement électromagnétique de haute fréquence en mis en oeuvre à une fréquence comprise entre 300 MHz et 300 GHz.

3. Procédé selon la revendication 1 ou 2, **caractérisé en ce que** la tension électrique est choisie de manière à ce que s'établisse une intensité électrique comprise entre 1 A et 100 A, et notamment entre 5 A et 30 A.

4. Procédé selon une des revendications 1 à 3, **caractérisé en ce que** la pièce moulée est mise sous pression pendant l'action du rayonnement électromagnétique de haute fréquence et/ou la tension électrique.

5. Procédé selon une des revendications 1 à 4, **caractérisé en ce que** le rayonnement électromagnétique de haute fréquence et/ou la tension électrique sont dirigés suivant le sens de la conductivité préférée de la pièce moulée, et notamment de la normale à la surface de la plaque.

6. Procédé selon une des revendications 1 à 5, **caractérisé en ce que** les particules de remplissage sont choisies parmi le groupe des métaux, alliages de métaux, oxydes de métaux, carbones, notamment le graphite et/ou le noir de carbone.

7. Procédé selon une des revendications 1 à 6, **caractérisé en ce que** les particules de remplissage sont dispersées dans au moins un monomère, dimère et/ou oligomère liquides ou dilués, le mélange ainsi obtenu étant durci dans un outil de formage pour former la pièce moulée.

8. Procédé selon une des revendications 1 à 6, **caractérisé en ce que** les particules de remplissage sont dispersées dans au moins un polymère plastifié thermoplastique et/ou thermo-élastique, le mélange ainsi obtenu étant mis en forme et refroidi pour former la pièce moulée.

9. Procédé selon une des revendications 1 bis 8, **caractérisé en ce que** l'orientation des particules de remplissage en forme de fibres est obtenue en mettant en oeuvre des particules de remplissage ferromagnétiques en forme de fibres et en les orientant dans le mélange encore liquide ou plastifié par application d'un champ magnétique suivant le sens de la conductivité préférée de la pièce moulée, et notamment de la normale à la surface de la plaque.

10. Procédé selon une des revendications 1 bis 8, **caractérisé en ce que** l'orientation des particules de remplissage en forme de fibres s'effectue de telle sorte que les particules de remplissage sont orientées dans le mélange encore liquide ou plastifié par application de forces de cisaillement suivant le sens de la conductivité préférée de la pièce moulée, et notamment de la normale à la surface de la plaque.

11. Procédé selon la revendication 8, **caractérisé en ce que** les particules de remplissage sont dispersées dans un premier polymère plastifié thermoplastique et/ou thermo-élastique, ce premier mélange ainsi obtenu étant mélangé à un deuxième polymère plastifié thermoplastique et/ou thermo-élastique, ledit deuxième polymère n'étant pas ou seulement partiellement miscible avec le premier, le deuxième mélange obtenu étant enfin mis en forme et refroidi pour former la pièce moulée.

12. Procédé selon la revendication 8, **caractérisé en ce qu'**un premier polymère plastifié thermoplastique et/ou thermo-élastique est mélangé à un deuxième polymère plastifié thermoplastique et/ou thermo-élastique, ledit deuxième polymère n'étant pas ou seulement partiellement miscible avec le premier, les particules de remplissage étant dispersées dans le premier mélange ainsi obtenu et le mélange final obtenu étant enfin mis en forme et refroidi pour former la pièce moulée.
